# FASCICULE DE BREVET EUROPEEN

(11) **EP 2 237 975 B1**
(45) Date de publication et mention de la délivrance du brevet: **01.04.2015**
(21) Numéro de dépôt: 08862937.3
(22) Date de dépôt: 15.12.2008
(51) Int. Cl.: B60C 9/20, B60C 9/07

(54) **PNEUMATIQUE RADIAL ALLEGE**
LEICHTER RADIALREIFEN
LIGHT RADIAL TYRE

(30) Priorité: 18.12.2007 FR 0759959
(43) Date de publication de la demande: 13.10.2010
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: BESTGEN, Luc, F-63140 Chatel-guyon (FR); VALLE, Alain, F-63118 Cebazat (FR)
(74) Mandataire: Le Cam, Véronique Marie Christine
(86) Numéro de dépôt international: PCT/EP2008/067491
(87) Numéro de publication internationale: WO 2009/077477

(56) Documents cités:
- GB-A- 2 102 746
- US-A- 3 861 440
- US-A- 4 210 189
- US-A- 5 441 093

## Description

La présente invention concerne un pneumatique allégé destiné à équiper un véhicule et plus particulièrement destiné à équiper un véhicule à deux roues tel qu'une motocyclette.

Bien que non limité à une telle application, l'invention sera plus particulièrement décrite en référence à un tel pneumatique de motocyclette, ou moto.

L'armature de renforcement ou renforcement des pneumatiques et notamment des pneumatiques de motocyclette est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvus de renforts filaires souvent longitudinaux, qui sont par la suite assemblés ou empilés afin de confectionner une ébauche de pneumatique. Les nappes sont réalisées à plat, avec des dimensions importantes, et sont par la suite coupées en fonction des dimensions d'un produit donné. L'assemblage d'au moins une partie des produits semi-finis est réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisée pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les éléments de renforcement des différentes structures de renfort sont appliqués directement sur les couches adjacentes de mélanges caoutchouteux, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base, tels que les mélanges caoutchouteux et les éléments de renforcement sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des fils circonférentiels, le tout étant noyé dans un mélange caoutchouteux d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc), tandis que d'autres sont réalisés à partir de l'application directe de mélanges et/ou d'éléments de renforcement.

Dans le présent document, afin de tenir compte des évolutions technologiques récentes tant dans le domaine de la fabrication que pour la conception de produits, les termes classiques tels que «nappes», «tringles», etc, sont avantageusement remplacés par des termes neutres ou indépendants du type de procédé utilisé. Ainsi, le terme «renfort de type carcasse» ou «renfort de flanc» est valable pour désigner les éléments de renforcement d'une nappe carcasse dans le procédé classique, et les éléments de renforcement correspondants, en général appliqués au niveau des flancs, d'un pneumatique produit selon un procédé sans semi-finis. Le terme «zone d'ancrage», pour sa part, peut désigner tout autant le "traditionnel" retournement de nappe carcasse autour d'une tringle d'un procédé classique, que l'ensemble formé par les éléments de renforcement circonférentiels, le mélange caoutchouteux et les portions adjacentes de renfort de flanc d'une zone basse réalisée avec un procédé avec application sur un noyau toroïdal.

Comme dans le cas de tous les autres pneumatiques, on assiste à une radialisation des pneumatiques pour motos, l'architecture de tels pneumatiques comprenant une armature de carcasse formée d'une ou deux couches d'éléments de renforcement faisant avec la direction circonférentielle un angle pouvant être compris entre 65° et 90°, ladite armature de carcasse étant radialement surmontée d'une armature de sommet formée au moins d'éléments de renforcement généralement textiles. Il subsiste toutefois des pneumatiques non radiaux auquel se rapporte également l'invention. L'invention se rapporte encore à des pneumatiques partiellement radiaux, c'est-à-dire dont les éléments de renforcement de l'armature de carcasse sont radiaux sur au moins une partie de ladite armature de carcasse, par exemple dans la partie correspondant au flanc du pneumatique.

De nombreuses architectures d'armature de sommet ont été proposées, selon que le pneumatique sera destiné à la monte à l'avant de la moto ou à la monte à l'arrière. Une première structure consiste, pour ladite armature de sommet, à employer uniquement des câbles circonférentiels, et ladite structure est plus particulièrement employée pour la position arrière. Une deuxième structure, directement inspirée des structures couramment employées en pneumatiques pour véhicules de Tourisme, a été utilisée pour améliorer la résistance à l'usure, et consiste dans l'utilisation d'au moins deux couches de sommet d'éléments de renforcement parallèles entre eux dans chaque couche mais croisés d'une couche à la suivante en faisant avec la direction circonférentielle des angles aigus, de tels pneumatiques étant plus particulièrement adaptés pour l'avant des motos. Les dites deux couches de sommet peuvent être surmontées radialement d'au moins une couche d'éléments circonférentiels, généralement obtenus par enroulement hélicoïdal d'une bandelette d'au moins un élément de renforcement enrobé de caoutchouc. Le brevet FR 2 561 588 décrit ainsi une telle armature de sommet, avec au moins une couche dont les éléments de renforcement font avec la direction circonférentielle un angle pouvant varier entre 0° et 8°, le module d'élasticité de tels éléments s'élevant à au moins 6000 N/mm², et, disposée entre l'armature de carcasse et la couche d'éléments circonférentiels, d'une couche d'amortissement formée principalement de deux couches d'éléments croisés d'une couche à la suivante en faisant entre eux des angles compris entre 60° et 90°, les dites couches croisées étant formées d'éléments de renforcement textiles ayant un module d'élasticité d'au moins 6000 N/mm².

Le brevet US 5 301 730, en vue d'augmenter la motricité d'un pneumatique pour position arrière d'une moto, propose une armature de sommet composée, en allant de l'armature de carcasse radiale à la bande de roulement, d'au moins une nappe d'éléments sensiblement circonférentiels et de deux nappes d'éléments croisés d'une nappe à la suivante en faisant avec la direction circonférentielle un angle pouvant être compris entre 35° et 55°, la nappe d'éléments parallèles à la direction circonférentielle pouvant être formée d'éléments en polyamide aromatique, et les nappes d'éléments croisés en polyamide aliphatique.

D'autres pneumatiques connus sont décrits dans les documents US-A-3 861 440, US-A-4 210 189 et GB-A-2 102 746.

L'invention a pour but de permettre la réalisation d'un pneumatique allégé pour motocyclettes, sans nuire pour autant aux autres propriétés, nécessaires à la satisfaction des utilisateurs, notamment en conservant des propriétés d'endurance satisfaisantes et en conciliant des propriétés en termes de rigidité de dérive du pneumatique et des vitesses maximums supportées par le pneumatique suffisamment élevées.

Ce but a été atteint selon l'invention par un pneumatique tel que défini dans la revendication 1.

La direction circonférentielle du pneumatique, ou direction longitudinale, est la direction correspondant à la périphérie du pneumatique et définie par la direction de roulement du pneumatique.

Un plan circonférentiel ou plan circonférentiel de coupe est un plan perpendiculaire à l'axe de rotation du pneumatique. Le plan équatorial est le plan circonférentiel passant par le centre ou sommet de la bande de roulement.

Un plan radial ou méridien est un plan qui contient l'axe de rotation du pneumatique.

L'axe de rotation du pneumatique est l'axe autour duquel il tourne en utilisation normale.

La direction transversale, méridienne ou axiale du pneumatique est parallèle à l'axe de rotation du pneumatique.

Les angles formés par les éléments de renforcement de la structure de carcasse satisfont les normes pour que le pneumatique réponde à l'appellation radiale en usage pour des motocyclettes.

Conformément à l'invention, au moins sur une partie des flancs, le pneumatique comporte deux portions adjacentes de couches d'armature de carcasse dont les éléments de renforcement sont orientés de part et d'autres d'un plan méridien. Avantageusement encore selon l'invention, les éléments de renforcement desdites portions de couches d'armature de carcasse sont croisés d'une couche à la suivante d'un angle d'au moins 10°. Dans le cas d'un pneumatique comportant une couche de carcasse formant un retournement autour d'une tringle, les deux portions adjacentes de couches d'armature de carcasse selon l'invention peuvent être constituées de la couche de carcasse et de son retournement.

Les éléments de renforcement de la couche de carcasse d'un pneumatique ainsi réalisé selon l'invention présentent un angle avec la direction circonférentielle qui diminue depuis la zone du bourrelet jusqu'au plan équatorial. La différence entre l'angle formé par les éléments de renforcement de la couche de carcasse avec la direction circonférentielle au niveau du bourrelet avec l'angle formé par les éléments de renforcement de la couche de carcasse avec la direction circonférentielle au niveau du plan équatorial est supérieure à 10°. Avantageusement, cette différence d'angles est supérieure à trois fois la différence d'angles dans le cas d'un pneumatique usuel comportant une armature de carcasse symétrique, c'est-à-dire d'un pneumatique comportant des couches de carcasse dont les éléments de renforcement sont croisés d'une couche à l'autre, les angles formés par lesdits éléments de renforcement avec la direction circonférentielle étant égaux en valeur absolue.

Les essais réalisés sur des motocyclettes avec des pneumatiques conformes à l'invention ont mis en évidence qu'ils permettaient de conférer des rigidités de dérive satisfaisantes notamment du fait du croisement des éléments de renforcement de la couche de travail avec les éléments de renforcement de la structure de renfort de type carcasse d'un angle supérieur à 40°.

Selon un mode de réalisation préféré de l'invention, au moins au niveau du plan équatorial, les éléments de renforcements d'au moins une couche de travail et les éléments de renforcement de la structure de renfort de type carcasse sont orientés dans des directions opposées par rapport au plan équatorial.

En outre, les vitesses maximales permises avec un tel pneumatique sont satisfaisantes pour des applications pour motocyclettes de type routières, ledit pneumatique selon l'invention autorisant des vitesses supérieures à celles obtenues avec certains pneumatiques d'architectures plus conventionnelles comportant notamment plusieurs nappes de travail dont les éléments de renforcement sont croisés d'une nappe à la suivante.

Par ailleurs, dans le cas d'une fabrication « traditionnelle » comportant une étape de conformation, l'invention peut permettre de mettre en place ladite couche de sommet de travail avant ladite étape conformation.

Les inventeurs ont notamment encore su mettre en évidence que la mise en place de ladite couche de travail avant l'étape de conformation dans un procédé de fabrication dit « traditionnel » permet de simplifier la réalisation du pneumatique selon l'invention et donc de réduire encore ses coûts de fabrication ; en effet, la présence de la couche de travail avant l'étape de conformation peut notamment permettre de mettre en place une armature de carcasse dont les éléments de renforcement présentent un angle formé avec la direction circonférentielle constant sur toute sa largeur axiale pour obtenir après conformation un angle différent de ladite armature de carcasse au niveau de la couche de travail, notamment sous la bande de roulement, et dans les flancs pour satisfaire la définition du pneumatique selon l'invention.

De préférence, au moins au niveau du plan équatorial, les éléments de renforcement d'au moins une couche de travail forment un angle avec la direction circonférentielle strictement inférieur à 45°. Une telle réalisation de l'invention permet notamment d'augmenter encore la rigidité de dérive du pneumatique.

De préférence encore, l'invention prévoit que l'ensemble des éléments de renforcement de deux couches de travail superposées sont orientés dans la même direction par rapport à la direction méridienne et de préférence les éléments de renforcement étant croisés d'une couche à la suivante d'un angle d'au plus 5°. Selon une telle réalisation de l'invention, la présence de deux couches de travail avant une étape de conformation peut autoriser comme précédemment la mise en place d'une armature de carcasse dont les éléments de renforcement présentent un angle formé avec la direction circonférentielle constant sur toute sa largeur axiale pour obtenir après conformation un angle différent de ladite armature de carcasse sous la bande de roulement et dans les flancs pour satisfaire la définition du pneumatique selon l'invention.

Selon d'autres modes de réalisations de l'invention, le pneumatique peut comporter plusieurs couches de travail une seule étant mise en place avant l'étape de conformation durant la fabrication du pneumatique.

Conformément à l'invention, notamment lorsque le pneumatique comporte une seule couche de carcasse formant un retournement autour d'une tringle dans le bourrelet, les éléments de renforcement de la couche de carcasse et les éléments de renforcement de son retournement sont orientés de part et d'autre d'un plan méridien.

Selon l'invention, lorsque le pneumatique comporte au moins deux couches de carcasse, au moins au niveau du plan équatorial, les éléments de renforcement des différentes couches de carcasse sont croisés d'une couche à la suivante d'un angle d'au plus 5°. De telles valeurs d'angles autorisent la fabrication des pneumatiques selon des procédés comportant une étape de conformation.

Une variante préférée de l'invention prévoit que, dans les flancs du pneumatique, les éléments de renforcement des couches carcasses forment avec la direction circonférentielle des angles supérieurs à 80°.

Une variante avantageuse de l'invention prévoit que l'angle formé par les éléments de renforcements de la couche de travail et les éléments de renforcement de la structure de renfort de type carcasse est supérieur à 70°. Une telle variante de réalisation de l'invention permet d'augmenter encore la rigidité de dérive du pneumatique.

Selon un mode de réalisation préféré de l'invention, au moins une couche de carcasse comportant une partie formant un retournement autour d'une tringle dans le bourrelet, l'extrémité d'au moins un retournement de couche carcasse est superposé à une extrémité d'au moins une couche de travail et de préférence sur une longueur d'au moins 3 mm. La superposition d'un retournement de couche carcasse avec une extrémité d'une couche de travail tel que proposé par l'invention, autorise notamment une amélioration de la tenue en ligne droite à haute vitesse. Avantageusement encore, la superposition d'un retournement de couche carcasse avec une extrémité d'une couche de travail est réalisée sur une longueur inférieure à 12 mm, notamment pour autoriser la fabrication des pneumatiques comportant une étape de conformation.

Avantageusement encore, selon une première variante de réalisation de l'invention, au moins une couche de carcasse comportant une partie formant un retournement autour d'une tringle dans le bourrelet, la distance radiale entre l'extrémité d'au moins un retournement de couche carcasse et l'extrémité radialement intérieure de la tringle est comprise entre 50 % et 75 % de la distance radiale entre une extrémité d'épaulement et l'extrémité radialement intérieure de la tringle. Selon cette première variante de réalisation de l'invention, il est possible d'améliorer la stabilité et/ou la maniabilité d'une moto équipée d'un tel pneumatique.

Une extrémité d'épaulement est définie, dans la zone de l'épaule du pneumatique, lorsque ce dernier est monté sur sa jante de service et gonflé, par la projection orthogonale sur la surface extérieure du pneumatique de l'intersection des tangentes aux surfaces d'une extrémité axialement extérieure de la bande de roulement d'une part et de l'extrémité radialement extérieure d'un flanc d'autre part.

Selon une deuxième variante de réalisation de l'invention, au moins une couche de carcasse comportant une partie formant un retournement autour d'une tringle dans le bourrelet, l'extrémité d'au moins un retournement de couche carcasse s'étend sous la bande de roulement. La réalisation d'un pneumatique selon cette deuxième variante de l'invention, outre une amélioration en termes de maniabilité et stabilité, permet de contribuer encore à une amélioration de la rigidité de dérive du pneumatique.

Selon l'une ou l'autre de ces variantes de réalisation de l'invention, comme énoncé précédemment, le retournement de la couche de carcasse peut être superposé à une extrémité d'au moins une couche de travail, ladite couche de travail s'étendant alors au moins dans une partie du flanc dans le cas de la première variante de réalisation.

L'invention prévoit encore avantageusement selon un mode de réalisation de l'invention, lorsque le retournement de la couche de carcasse est superposé à une extrémité d'au moins une couche de travail, que l'extrémité d'au moins un retournement de couche carcasse est positionné entre au moins une couche carcasse et la couche de travail.

Selon un autre mode de réalisation de l'invention, l'extrémité d'au moins un retournement de couche carcasse est positionné axialement et/ou radialement extérieurement à la couche de travail.

Une réalisation préférée de l'invention prévoit que le pneumatique est notamment constitué d'une structure de renforcement de sommet qui comporte en outre au moins une couche d'éléments de renforcement circonférentiels ; selon l'invention, la couche d'éléments de renforcement circonférentiels est constituée d'au moins un élément de renforcement orienté selon un angle formé avec la direction longitudinale inférieur à 5°.

Une réalisation avantageuse de l'invention prévoit que la couche d'éléments de renforcement circonférentiels est positionnée radialement extérieurement à au moins une partie d'une couche de travail.

La couche d'éléments de renforcement circonférentiels peut ainsi être réalisée directement sous la bande de roulement pour former outre sa fonction première une couche de protection de la carcasse et des autres couches de la structure de renforcement de sommet, contre des agressions mécaniques éventuelles.

La couche d'éléments de renforcement circonférentiels peut encore être réalisée entre deux couches de travail, notamment par souci économique, la quantité de matière et le temps de pose étant ainsi diminués. Selon une telle réalisation de l'invention et notamment dans le cas d'une technique de fabrication comportant une étape de conformation, la couche d'éléments de renforcement circonférentielles et la couche de travail radialement la plus à l'extérieure sont mises en place après l'étape de conformation.

Une autre réalisation avantageuse de l'invention prévoit que la couche d'éléments de renforcement circonférentiels est positionnée au moins partiellement radialement à l'intérieur de la couche de travail radialement intérieure. Selon cette réalisation, la couche d'éléments de renforcement circonférentiels est réalisée radialement à l'intérieur des couches de travail et peut notamment permettre d'améliorer l'adhérence et la motricité du pneumatique. Une telle réalisation de l'invention nécessite alors préférentiellement une réalisation selon une technique de type sur noyau dur.

Une autre variante de l'invention prévoit qu'au moins une couche d'éléments de renforcement circonférentiels est positionnée au moins partiellement radialement à l'intérieur de la structure de renfort de type carcasse. Selon cette variante de l'invention, le pneumatique est alors réalisé préférentiellement selon une technique de fabrication du type sur noyau dur ou forme rigide.

Selon une réalisation préférée de l'invention, les éléments de renforcement des couches de travail sont en matériau textile.

De préférence également, les éléments de renforcement de la couche d'éléments de renforcement circonférentiels sont métalliques et/ou textiles et/ou en verre. L'invention prévoit notamment l'utilisation d'éléments de renforcement de natures différentes dans une même couche d'éléments de renforcement circonférentiels.

De préférence encore, les éléments de renforcement de la couche d'éléments de renforcement circonférentiels présentent un module d'élasticité supérieur à 6000 N/mm².

D'autres détails et caractéristiques avantageux de l'invention ressortiront ci-après de la description des figures 1 à 3 qui représentent :
- figure 1, une vue méridienne d'un schéma d'un premier pneumatique,
- figure 2, une vue méridienne d'un schéma d'un deuxième pneumatique,
- figure 3, une vue méridienne d'un schéma d'un troisième pneumatique.

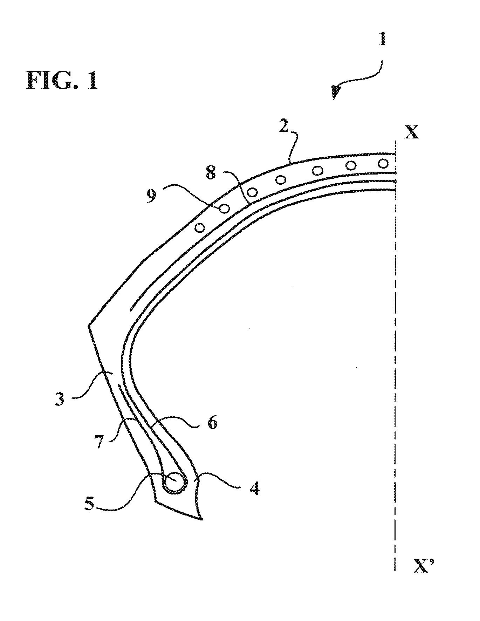

Les pneumatiques des figures 1 à 3 diffèrent de celui de la présente invention en ce qu'ils ne comportent qu'une seule couche de sommet. Leur description est cependant utile à la compréhension de la présente invention.

Les figures 1 à 3 ne sont pas représentées à l'échelle pour en simplifier la compréhension. Les figures ne représentent qu'une demi-vue d'un pneumatique qui se prolonge de manière symétrique par rapport à l'axe XX' qui représente le plan médian circonférentiel, ou plan équatorial, d'un pneumatique.

La figure 1 représente un pneumatique 1 pour motocyclette de dimension 120/70 ZR 17 (58W). Ce pneumatique 1 comprenant une bande de roulement 2 reliée par un flanc 3 à un bourrelet 4. Le bourrelet comporte une tringle 5 autour de laquelle est ancrée une armature de carcasse constituée d'une seule couche 6 formant un retournement 7. La couche 6 comprenant des éléments de renforcement textiles de type rayonne formant un angle avec la direction circonférentielle sensiblement égal à 85° dans les flancs. L'angle formé par les éléments de renforcement du retournement 7 de l'armature de carcasse forment également un angle avec la direction circonférentielle sensiblement égal à -85°.

Sous la bande de roulement 2, l'armature de carcasse est radialement surmontée d'une armature sommet constituée d'une couche 8 d'éléments de renforcement textiles de type rayonne formant un angle avec la direction circonférentielle égal à -41°, au niveau du plan équatorial.

L'angle formé avec la direction circonférentielle par les éléments de renforcement de la couche 6 sous la bande de roulement et plus précisément radialement sous la couche 8 est égal à 69°, au niveau du plan équatorial.

La différence entre les angles formés avec la direction circonférentielle des éléments de renforcement de la couche 6 et ceux de la couche 8 est égale à 110° et donc supérieure à 40° au niveau du plan équatorial et donc sur la totalité de la largeur de ladite couche 8.

La fabrication d'un tel pneumatique 1 est avantageusement réalisée suivant un procédé de fabrication comportant une étape de conformation. La couche d'armature de carcasse 6 comportant des éléments de renforcement formant un angle avec la direction circonférentielle égal à 85° est mise en place. La couche 8 comportant des éléments de renforcement formant un angle égal à -45° est ensuite déposée radialement à l'extérieur de la couche d'armature de carcasse 2. Durant l'étape de conformation, les angles formés entre la direction circonférentielle et les éléments de renforcement de la couche 6 et de son retournement 7 sont conservés dans les flancs alors que l'angle formé par les éléments de renforcement de la couche 6 avec la direction circonférentielle sous la bande de roulement est modifié pour atteindre une valeur de 69° au sommet du pneumatique, c'est-à-dire au niveau du plan équatorial. La différence entre l'angle formé par les éléments de renforcement de la couche de carcasse avec la direction circonférentielle au niveau du bourrelet avec l'angle formé par les éléments de renforcement de la couche de carcasse avec la direction circonférentielle au niveau du plan équatorial est égale à 16° et donc supérieure à 10°. Dans le cas d'un pneumatique comportant deux couches de carcasse formées d'éléments de renforcement disposés de manière symétrique d'une couche à l'autre par rapport à la direction circonférentielle, la différence entre l'angle formé par les éléments de renforcement d'une couche de carcasse avec la direction circonférentielle au niveau du bourrelet avec l'angle formé par les éléments de renforcement de ladite couche de carcasse avec la direction circonférentielle au niveau du plan équatorial serait égale à 2 degrés, soit huit fois moins que selon notre invention.

L'angle formé par les éléments de renforcement de la couche 8 avec la direction circonférentielle est légèrement modifié après conformation pour passer de -45° à -41° au sommet du pneumatique, c'est-à-dire au niveau du plan équatorial. Les variations d'angles observées après conformation sont moins prononcées au niveau des extrémités de la couche 8.

La couche d'éléments de renforcement circonférentiels 9 est mise en place après l'étape de conformation.

Une telle couche d'éléments de renforcement circonférentiels est avantageusement constituée d'un seul fil enroulé pour former un angle avec la direction longitudinale sensiblement égal à 0°. Une couche d'éléments de renforcement circonférentiels peut encore être réalisée par l'enroulement simultané de plusieurs fils nus ou sous forme de bandelettes lorsqu'ils sont noyés dans du caoutchouc.

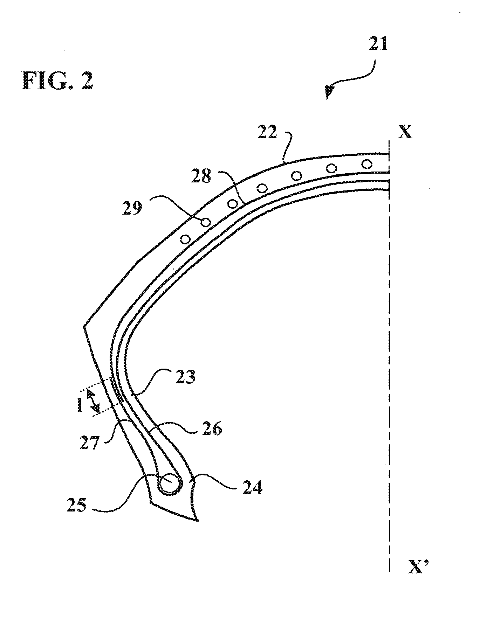

La figure 2 représente un pneumatique 21, semblable à celui de la figure 1 si ce n'est que la couche d'éléments de renforcement 28 s'étend dans la partie haute du flanc 23. Sur cette figure 2, l'extrémité de cette couche 28 est alors axialement intercalée entre la couche d'armature de carcasse 26 et l'extrémité de son retournement 27. Le recouvrement entre l'extrémité du retournement 27 et la couche d'éléments de renforcement 28 s'étend sur une longueur 1 d'environ 8 mm. Cette zone de recouvrement va entraîner une légère modification de l'angle des éléments de renforcement de la couche 26 et de son retournement 27 dans cette zone de recouvrement. Les modifications d'angle observés sont inférieures à ce qui peut être observé dans la partie centrale de la couche 28 car le couplage entre les éléments de renforcement est très faible de part la présence des extrémités des éléments de renforcement de la couche 28.

Les pneumatiques ainsi fabriqués montrent que dans un tel cas de recouvrement de la couche 28 avec le retournement de l'armature de carcasse 27, l'orientation de part et d'autre d'un plan méridien des éléments de renforcement de la couche d'armature de carcasse 26 et des éléments de renforcement de son retournement 27 est conservée.

Le pneumatique 21 de la figure 2, comporte encore une couche 29 d'éléments de renforcement circonférentiels en aramide radialement extérieure à la couche 28.

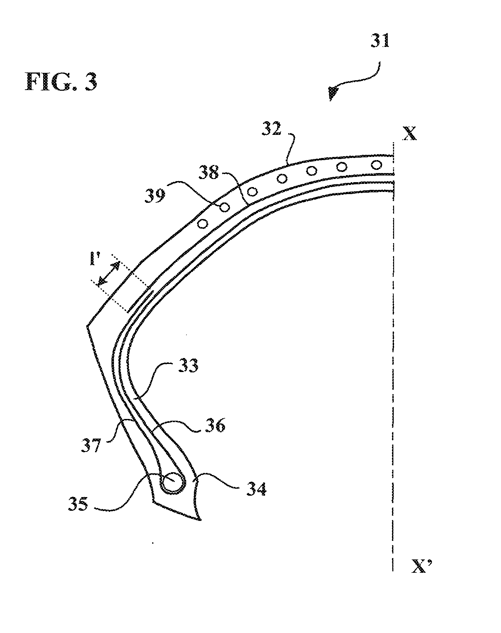

La figure 3 représente un pneumatique 31, semblable à celui de la figure 1 si ce n'est que le retournement 37 de la couche d'armature de carcasse 36 s'étend sous une partie de la bande de roulement 32. Sur cette figure 3, l'extrémité de la couche 38 est alors axialement intercalée entre la couche d'armature de carcasse 36 et l'extrémité de son retournement 37. Le recouvrement entre l'extrémité du retournement 37 et la couche d'éléments de renforcement 38 s'étend sur une longueur l' d'environ 6 mm. Comme dans le cas de la figure 2, cette zone de recouvrement va entraîner une légère modification de l'angle des éléments de renforcement de la couche 36 et de son retournement 37 dans cette zone de recouvrement. Les modifications d'angle observés sont inférieures à ce qui peut être observé dans la partie centrale de la couche 38 car le couplage entre les éléments de renforcement est très faible de part la présence des extrémités des éléments de renforcement de la couche 38.

Comme dans le cas du pneumatique représenté sur la figure 2, les pneumatiques ainsi fabriqués montrent que dans un tel cas de recouvrement de la couche 38 avec la retournement de l'armature de carcasse 37, l'orientation de part et d'autre d'un plan méridien des éléments de renforcement de la couche d'armature de carcasse 36 et des éléments de renforcement de son retournement 37 est conservée.

Le pneumatique 31 de la figure 3 comporte encore une couche 39 d'éléments de renforcement circonférentiels en aramide radialement extérieure à la couche 38.

L'invention ne doit pas être interprétée comme étant limitée aux exemples illustrés sur les figures mais s'étend bien entendu à d'autres variantes de réalisation. L'invention s'étend, notamment dans le cas de pneumatiques présentant un recouvrement entre le retournement de l'armature de carcasse et la couche d'éléments de renforcement constituant l'armature de sommet à des configurations selon lesquelles soit l'extrémité de la couche d'armature sommet s'insère entre deux portions d'armature de carcasse, soit l'extrémité d'une portion de carcasse, par exemple l'extrémité d'un retournement, s'insère entre une couche d'armature de carcasse et l'extrémité d'une couche d'armature de sommet.

L'invention s'étend encore à des pneumatiques pouvant comporter plusieurs couches d'armature de carcasse et/ou plusieurs couches de travail comme énoncé précédemment.

L'invention vise également le cas des pneumatiques fabriqués selon des procédés de type sur noyau dur, de tels pneumatiques pouvant ne pas comporter de tringles proprement dites comme expliqué précédemment.

Les pneumatiques selon l'invention peuvent encore comporter d'autres types d'éléments de renforcement tels que par exemple des éléments de renforcement orientés selon la direction circonférentielle et qui s'étendent au moins en partie dans les flancs comme décrits dans la demande de brevet WO 02/09956.

Des essais et des mesures ont été réalisés avec un pneumatique conforme à la représentation de la figure 3.

Des essais de référence ont été conduits en parallèle avec trois types de pneumatiques de mêmes dimensions et d'architectures usuelles pour ce type de dimensions.

Les pneumatiques étaient montés sur une jante de 3.5 MT 17, gonflés à la même pression de 2.5 bar et soumis à une charge de 115 kg.

Le premier pneumatique de référence (référence 1) est constitué de deux couches d'armature de carcasse constituée d'éléments de renforcement en rayonne, croisés d'une couche à la suivante et formant des angles avec la direction circonférentielle de 75° radialement surmontées d'une couche d'élément de renforcement circonférentiels en aramide.

Le deuxième pneumatique de référence (référence 2) est constitué de deux couches d'armature de carcasse constituées d'éléments de renforcement en rayonne formant des angles avec la direction circonférentielle de 90° et de deux couches de sommet de travail constituées d'éléments de renforcement en aramide et formant des angles avec la direction circonférentielle de +25° et -25°.

Le troisième pneumatique de référence (référence 3) est constitué de deux couches d'armature de carcasse constituées d'éléments de renforcement en rayonne, croisés d'une couche à la suivante et formant des angles avec la direction circonférentielle de 75°, d'une couche d'élément de renforcement circonférentiels en aramide radialement surmontée de deux couches de sommet de travail constituées d'éléments de renforcement en nylon et formant des angles avec la direction circonférentielle de +30° et -30°.

Les essais ont consistés à mesurer d'une part les vitesses de roulage maximales et d'autre part les rigidités de dérive sur des machines de roulage.

Les différents résultats obtenus sont repris dans le tableau ci-après sous forme de données relatives par rapport à une base 100, fixée à partir de la meilleure des performances entre les trois pneumatiques de référence.

| | Référence 1 | Référence 2 | Référence 3 | pneumatique selon la figure 3 |
|---|---|---|---|---|
| Vitesse maximale | 100 | 80 | 90 | 100 |
| Rigidité de dérive | 80 | 100 | 100 | 100 |

Les valeurs indiquées dans ce tableau montrent que le pneumatique selon la figure 3 présente les meilleures performances concernant à la fois les vitesses maximales pouvant être atteintes et la rigidité de dérive, avec une structure globale allégée ou tout au moins sensiblement identique en termes de quantité d'éléments de renforcements et donc en termes de masse.

En effet, le pneumatique selon la figure 3 présentant une architecture simplifiée est bien entendu plus léger et peut être d'une réalisation moins onéreuse d'une part du fait la quantité moindre de matériaux utilisés et d'autre part du temps de réalisation qui peut être diminué en conséquence.

## Revendications

1. Pneumatique (1, 21, 31) comportant au moins une structure de renfort de type carcasse, formée d'au moins une couche (6, 26, 36) d'éléments de renforcement parallèles entre eux et formant avec la direction circonférentielle des angles compris entre 65° et 87°, dite couche de carcasse, ancrée de chaque côté du pneumatique à un bourrelet (4, 24, 34), chaque bourrelet se prolongeant radialement vers l'extérieur par un flanc (3, 23, 33), les flancs rejoignant radialement vers l'extérieur une bande de roulement (2, 22, 32), et comportant sous la bande de roulement une structure de renforcement de sommet constituée d'au moins deux couches (8, 28, 38) d'éléments de renforcement faisant avec la direction circonférentielle des angles compris entre 10° et 45°, dites couches de travail, radialement extérieures à la structure de renfort de type carcasse, dans les flancs (3, 23, 33), le pneumatique comportant moins deux portions (6, 7 ; 26, 27 ; 36, 37) de couches de carcasse axialement adjacentes, les éléments de renforcement desdites portions de couches de carcasse étant orientés de part et d'autre d'un plan méridien, au moins au niveau du plan équatorial, les éléments de renforcements de la au moins une couche de carcasse (6, 26, 36) formant un angle avec la direction circonférentielle inférieur à 80°, la différence entre l'angle formé par les éléments de renforcement de la au moins une couche de carcasse avec la direction circonférentielle, au niveau du bourrelet, et l'angle formé par les éléments de renforcement de la au moins une couche de carcasse avec la direction circonférentielle, au niveau du plan équatorial, étant supérieure à 10°, au moins au niveau du plan équatorial, les éléments de renforcements d'au moins une couche de travail (8, 28, 38) étant croisés avec les éléments de renforcement de la au moins une couche de carcasse (6, 26, 36) d'un angle supérieur à 40°, **caractérisé en ce que** les éléments de renforcement de deux couches de travail superposées sont croisés d'une couche à la suivante d'un angle d'au plus 10°.

2. Pneumatique (1, 21, 31) selon la revendication 1, **caractérisé en ce que**, au moins au niveau du plan équatorial, les éléments de renforcement d'au moins une couche de travail (8, 28, 38) forment un angle avec la direction circonférentielle strictement inférieur à 45°.

3. Pneumatique (1, 21, 31) selon la revendication 1 ou 2, **caractérisé en ce que** les éléments de renforcement de deux couches de travail (8, 28, 38) superposées sont croisés d'une couche à la suivante d'un angle d'au plus 5°.

4. Pneumatique (1, 21, 31) selon l'une des revendications 1 à 3, au moins une couche de carcasse (6, 26, 36) comportant une partie formant un retournement (7, 27, 37) autour d'une tringle (5, 25, 35) dans le bourrelet (4, 24, 34), **caractérisé en ce que** les éléments de renforcement de la couche de carcasse (6, 26, 36) et les éléments de renforcement dans son retournement (7, 27, 37) sont orientés de part et d'autre d'un plan méridien.

5. Pneumatique (1, 21, 31) selon l'une des revendications précédentes, **caractérisé en ce que** l'angle formé par les éléments de renforcements de la couche de travail (8, 28, 38) et les éléments de renforcement de la au moins une couche de carcasse (6, 26, 36) est supérieur à 70°.

6. Pneumatique (21, 31) selon l'une des revendications précédentes, au moins une couche de carcasse (26, 36) comportant une partie formant un retournement (27, 37) autour d'une tringle (25, 35) dans le bourrelet (24, 34), **caractérisé en ce que** l'extrémité d'au moins un retournement (27, 37) de couche carcasse est superposé à une extrémité d'au moins une couche de travail (28, 38) et de préférence sur une longueur (1,1') d'au moins 3 mm.

7. Pneumatique (31) selon l'une des revendications précédentes, au moins une couche de carcasse (36) comportant une partie formant un retournement (37) autour d'une tringle (35) dans le bourrelet (34), **caractérisé en ce que** l'extrémité d'au moins un retournement (37) de couche carcasse s'étend sous la bande de roulement (32).

8. Pneumatique (1, 21) selon l'une des revendications 1 à 6, au moins une couche de carcasse (6, 26) comportant une partie formant un retournement (7, 27) autour d'une tringle (5, 25) dans le bourrelet (4, 24), **caractérisé en ce que** la distance radiale entre l'extrémité d'au moins un retournement (7, 27) de couche carcasse et l'extrémité radialement intérieure de la tringle (5, 25) est comprise entre 50 % et 75 % de la distance radiale entre une extrémité d'épaulement et l'extrémité radialement intérieure de la tringle.

9. Pneumatique (1, 21, 31) selon l'une des revendications précédentes, **caractérisé en ce que** la structure de renforcement de sommet comporte au moins une couche d'éléments de renforcement circonférentiels (9, 29, 39).

10. Pneumatique (1, 21, 31) selon la revendication 9, **caractérisé en ce que** les éléments de renforcement de la couche d'éléments de renforcement circonférentiels (9, 29, 39) sont métalliques et/ou textiles et/ou en verre.

11. Pneumatique (1, 21, 31) selon l'une des revendications précédentes, **caractérisé en ce que** les éléments de renforcement des couches de travail (8, 28, 38) sont en matériau textile.

12. Utilisation d'un pneumatique (1, 21, 31) tel que décrit selon l'une des revendications 1 à 11 pour un véhicule motorisé à deux roues tel qu'une motocyclette.

## Patentansprüche

1. Reifen (1, 21, 31), der mindestens eine Verstärkungsstruktur des Typs Karkasse aufweist, die aus mindestens einer Schicht (6, 26, 36), eine sogenannte Karkassenschicht, von Verstärkungselementen ausgebildet ist, die zueinander parallel sind und mit der Umfangsrichtung Winkel zwischen 65° und 87° bilden, wobei die Karkassenschicht auf jeder Seite des Reifens mit einem Wulst (4, 24, 34) verankert ist, wobei sich jeder Wulst radial nach außen durch eine Flanke (3, 23, 33) verlängert, wobei die Flanken radial nach außen auf eine Lauffläche (2, 22, 32) stoßen und unter der Lauffläche eine Scheitelverstärkungsstruktur aufweisen, die aus mindestens zwei Schichten (8, 28, 38) von Verstärkungselementen besteht, die mit der Umfangsrichtung Winkel zwischen 10° und 45° bilden, Arbeitsschichten genannt, die radial außerhalb der Verstärkungsstruktur des Typs Karkasse in den Flanken (3, 23, 33) liegen, wobei der Reifen mindestens zwei Abschnitte (6, 7; 26, 27; 36, 37) axial benachbarter Karkassenschichten aufweist, wobei die Verstärkungselemente der Karkassenschichtenabschnitte zu beiden Seiten einer Mittenebene ausgerichtet sind, wobei mindestens im Bereich einer Äquatorialebene die Verstärkungselemente der mindestens einen Karkassenschicht (6, 26, 36) einen Winkel mit der Umfangsrichtung kleiner als 80° bilden, wobei der Unterschied zwischen dem Winkel, der von den Verstärkungselementen der mindestens einen Karkassenschicht mit der Umfangsrichtung im Bereich des Wulsts gebildet wird, und dem Winkel, der von den Verstärkungselementen der mindestens einen Karkassenschicht mit der Umfangsrichtung im Bereich der Äquatorialebene gebildet wird, größer ist als 10°, wobei mindestens im Bereich der Äquatorialebene die Verstärkungselemente mindestens einer Arbeitsschicht (8, 28, 38) mit den Verstärkungselementen der mindestens einen Karkassenschicht (6, 26, 36) mit einem Winkel größer als 40° gekreuzt sind, **dadurch gekennzeichnet, dass** die Verstärkungselemente der zwei übereinanderliegenden Arbeitsschichten von einer Schicht zur nächsten mit einem Winkel von mehr als 10° gekreuzt sind.

2. Reifen (1, 21, 31) nach Anspruch 1, **dadurch gekennzeichnet, dass** die Verstärkungselemente mindestens einer Arbeitsschicht (8, 28, 38) mindestens im Bereich der Äquatorialebene einen Winkel mit der Umfangsrichtung bilden, der strikt kleiner ist als 45°.

3. Reifen (1, 21, 31) nach Anspruch 1 oder 2, **dadurch gekennzeichnet, dass** die Verstärkungselemente von zwei übereinanderliegenden Arbeitsschichten (8, 28, 38) von einer Schicht zur nächsten mit einem Winkel von mehr als 5° gekreuzt sind.

4. Reifen (1, 21, 31) nach einem der Ansprüche 1 bis 3, wobei mindestens eine Karkassenschicht (6, 26, 36) einen Teil aufweist, der eine Umkehrung (7, 27, 37) um einen Draht (5, 25, 35) in dem Wulst (4, 24, 34) bildet, **dadurch gekennzeichnet, dass** die Verstärkungselemente der Karkassenschicht (6, 26, 36) und die Verstärkungselemente in ihrer Umkehrung (7, 27, 37) zu beiden Seiten einer Mittenebene ausgerichtet sind.

5. Reifen (1, 21, 31) nach einem der vorhergehenden Ansprüche, **dadurch gekennzeichnet, dass** der Winkel, der von den Verstärkungselementen der Arbeitsschicht (8, 28, 38) und den Verstärkungselementen der mindestens einen Karkassenschicht (6, 26, 36) gebildet wird, größer ist als 70°.

6. Reifen (21, 31) nach einem der vorhergehenden Ansprüche, wobei mindestens eine Karkassenschicht (26, 36) einen Teil aufweist, der eine Umkehrung (27, 37) um einen Draht (25, 35) in dem Wulst (24, 34) bildet, **dadurch gekennzeichnet, dass** das Ende mindestens einer Umkehrung (27, 37) einer Karkassenschicht mit einem Ende mindestens einer Arbeitsschicht (28, 38) und vorzugsweise über eine Länge (1, 1') von mindestens 3 mm überlagert ist.

7. Reifen (31) nach einem der vorhergehenden Ansprüche, wobei mindestens eine Karkassenschicht (36) einen Teil aufweist, der eine Umkehrung (37) um einen Draht (35) in dem Wulst (34) bildet, **dadurch gekennzeichnet, dass** sich das Ende mindestens einer Umkehrung (37) einer Karkassenschicht unter der Lauffläche (32) erstreckt.

8. Reifen (1, 21) nach einem der Ansprüche 1 bis 6, wobei mindestens eine Karkassenschicht (6, 26) einen Teil aufweist, der eine Umkehrung (7, 27) um einen Draht (5, 25) in dem Wulst (4, 24) bildet, **dadurch gekennzeichnet, dass** die radiale Entfernung zwischen dem Ende der mindestens einen Umkehrung (7, 27) der Karkassenschicht und dem radial inneren Ende des Drahts (5, 25) zwischen 50 % und 75 % der radialen Entfernung zwischen einem Ansatz und einem radial inneren Ende des Drahtes liegt.

9. Reifen (1, 21, 31) nach einem der vorhergehenden Ansprüche, **dadurch gekennzeichnet, dass** die Scheitelverstärkungsstruktur mindestens eine Schicht umfänglicher Verstärkungselemente (9, 29, 39) aufweist.

10. Reifen (1, 21, 31) nach Anspruch 9, **dadurch gekennzeichnet, dass** die Verstärkungselemente der Schicht umfänglicher Verstärkungselemente (9, 29, 39) metallisch und/oder Textil und/oder aus Glas sind.

11. Reifen (1, 21, 31) nach einem der vorhergehenden Ansprüche, **dadurch gekennzeichnet, dass** die Verstärkungselemente der Arbeitsschichten (8, 28, 38) aus Textilmaterial bestehen.

12. Verwendung eines Reifens (1, 21, 31) wie oben nach einem der Ansprüche 1 bis 11 beschrieben, für ein motorisiertes Zweiradfahrzeug, wie zum Beispiel ein Motorrad.

## Claims

1. Tyre (1, 21, 31) comprising at least one carcass-type reinforcing structure formed of at least one layer (6, 26, 36) of mutually parallel reinforcing elements making angles of between 65° and 87° with the circumferential direction and known on a carcass layer, anchored on each side of the tyre to a bead (4, 24, 34), each bead extending radially outwards in the form of a sidewall (3, 23, 33), the sidewalls radially towards the outside meeting a tread (2, 22, 32), and comprising, under the tread, a crown reinforcing structure consisting of at least two layers (8, 28, 38) of reinforcing elements making angles of between 10° and 45° with the circumferential direction and known as working layers, radially on the outside of the carcass-type reinforcing structure, in the sidewalls (3, 23, 33), the tyre comprising at least two axially adjacent carcass layer portions (6, 7; 26, 27; 36, 37), the reinforcing elements of the said carcass layer portions being oriented on each side of a meridian plane, at least in the equatorial plane, the reinforcing elements of the at least one carcass layer (6, 26, 36) making an angle of less than 80° with the circumferential direction, the difference between the angle formed by the reinforcing elements of the at least one carcass layer and the circumferential direction at the bead and the angle formed by the reinforcing elements of the at least one carcass layer and the circumferential direction at the equatorial plane being greater than 10°, at least in the equatorial plane, the reinforcing elements of at least one working layer (8, 28, 38) crossing the reinforcing elements of the at least one carcass layer (6, 26, 36) at an angle greater than 40°, **characterized in that** the reinforcing elements of two superposed working layers cross those of a next layer by an angle of 10° degrees at most.

2. Tyre (1, 21, 31) according to Claim 1, **characterized in that**, at least in the equatorial plane, the reinforcing elements of at least one working layer (8, 28, 38) make an angle strictly smaller than 45° with the circumferential direction.

3. Tyre (1, 21, 31) according to Claim 1 or 2, with the tyre comprising at least two working layers, **characterized in that** the reinforcing elements of two superposed working layers (8, 28, 38) cross those of the next layer by an angle of 5° at most.

4. Tyre (1, 21, 31) according to one of Claims 1 to 3, at least one carcass layer (6, 26, 36) comprising a part turned back (7, 27, 37) around a bead wire (5, 25, 35) in the bead (4, 24, 34), **characterized in that** the reinforcing elements of the carcass layer (6, 26, 36) and the reinforcing elements in its turned-back portion (7, 27, 37) are oriented on each side of a meridian plane.

5. Tyre (1, 21, 31) according to one of the preceding claims, **characterized in that** the angle formed by the reinforcing elements of the working layer (8, 28, 38) and the reinforcing elements of the at least one carcass layer (6, 26, 36) is greater than 70°.

6. Tyre (21, 31) according to one of the preceding claims, with at least one carcass layer (26, 36) comprising a part (27, 37) turned back around a bead wire (25, 35) in the bead (24, 34), **characterized in that** the end of at least one turned-back portion (27, 37) of carcass layer is superposed on an end of at least one working layer (28, 38) and preferably over a length (1, 1') of at least 3 mm.

7. Tyre (31) according to one of the preceding claims, with at least one carcass layer (36) comprising a part (37) turned back around a bead wire (35) in the bead (34), **characterized in that** the end of at least one turned-back portion (37) of carcass layer extends under the tread (32).

8. Tyre (1, 21) according to one of Claims 1 to 6, with at least one carcass layer (6, 26) comprising a part (7, 27) turned back around a bead wire (5, 25) in the bead (4, 24), **characterized in that** the radial distance between the end of at least one turned-back portion (7, 27) of carcass layer and the radially interior end of the bead wire (5, 25) ranges between 50% and 75% of the radial distance between a shoulder end and the radially interior end of the bead wire.

9. Tyre (1, 21, 31) according to one of the preceding claims, **characterized in that** the crown reinforcing structure comprises at least one layer of circumferential reinforcing elements (9, 29, 39).

10. Tyre (1, 21, 31) according to Claim 9, **characterized in that** the reinforcing elements of the layer of circumferential reinforcing elements (9, 29 39) are made of metal and/or textile and/or glass.

11. Tyre (1, 21, 31) according to one of the preceding claims, **characterized in that** the reinforcing elements of the working layers (8, 28, 38) are made of textile.

12. Use of a tyre (1, 21, 31) as described in one of Claims 1 to 11 for a motorized two-wheeled vehicle such as a motorcycle.
